# EUROPÄISCHE PATENTANMELDUNG

(11) **EP 0 701 970 A1**
(43) Veröffentlichungstag der Anmeldung: **20.03.1996**
(21) Anmeldenummer: 95113799.1
(22) Anmeldetag: 02.09.1995
(51) Int. Cl.: C01C 1/02

(54) **Verfahren zur Herstellung von Ammoniakwasser**

(30) Priorität: 14.09.1994 DE 4432690
(71) Anmelder: BASF AKTIENGESELLSCHAFT, D-67056 Ludwigshafen (DE)
(72) Erfinder: Portl, Herbert, D-64653 Lorsch (DE); Scheuermann, Ernst, D-67136 Fussgönheim (DE); Bickel, Wolfgang, D-67269 Grünstadt (DE)

(57) **Zusammenfassung**

Verfahren zur Herstellung wäßriger Ammoniaklösungen durch Umsetzung von Wasser und Ammoniak, bei welchem man die anfallende Wärme mittels eines oder mehrerer mit Ammoniak betriebener Wärmetauscher abführt, wobei man einen Teil des bei der Kühlung verwendeten Ammoniaks gasförmig zur Herstellung der wäßrigen Ammoniaklösung einsetzt.

## Beschreibung

Die vorliegende Erfindung betrifft ein verbessertes Verfahren zur Herstellung wässriger Ammoniaklösungen durch Umsetzung von Wasser mit Ammoniak.

Wäßrige Lösungen des Ammoniaks, welche häufig als Salmiakgeist oder Ammoniakwasser bezeichnet werden, finden in der Industrie unterschiedliche Anwendung. Typische Beispiele sind die Herstellung von Ammoniumsalzen, Aminen oder Säureamiden sowie die Neutralisation von Säuren. Neuerdings wird Ammoniakwasser auch zur Stickoxidentfernung aus Rauchgasen von Feuerungsanlagen eingesetzt.

Die Herstellung wäßriger Ammoniaklösungen erfolgt durch die Umsetzung von Ammoniak mit Wasser gemäß folgendem Reaktionsschema:

NH₃ + H₂O → NH₄OH

Bei der Reaktion wird Wärme freigesetzt, welche beim Herstellungsprozeß abgeführt werden muß. Die Löslichkeit des Ammoniakgases nimmt mit steigender Temperatur ab: bei 0°C lösen sich etwa 880 g Ammoniak in einem Liter Wasser, bei 40°C nur noch etwa 340 g Ammoniak.

Die Herstellung wäßriger Ammoniaklösung wird in dem Vortrag "Herstellung, Lagerung und Transport von Ammoniakwasser" vom 15.09.1992 im Haus der Technik in Essen, beschrieben. Hierbei wird in einem Mischbehälter das Ammoniakgas in Wasser eingeleitet. Da das Ammoniak aufgrund seines Herstellungsprozesses Verunreinigungen wie Ölreste und/oder Katalysatorabrieb enthalten kann, wird es meist zuvor verdampft, um die Verunreinigungen in der Flüssigkeit zurückzubehalten. Die bei der Umsetzung von Ammoniak mit Wasser freiwerdende Wärme führt zu einer Erwärmung des Produktes in dem Mischbehälter, bevor dieses anschließend in einem nachgeschalteten Kühler wieder abgekühlt wird. Der eingesetzte Kühler wird mit Wasser betrieben. Das gekühlte Produkt wird in einen sogenannten Ansatzbehälter geleitet. Zum Erreichen der gewünschten Konzentration wird ein Teil des Produktes aus dem Ansatzbehälter erneut dem Mischbehälter zugeführt; bei Erreichen der vorgegebenen Konzentration wird das erhaltene Ammoniakwasser aus dem Kreislauf ausgeschleust und in einen Vorratstank geführt.

Ein ähnliches Herstellungsverfahren ist in der Firmenschrift "Ammonia", Spencer Chemical Company, Dwight Building, Kansas City, Missouri, S. 28 bis 29 beschrieben. Auch hier wird die anfallende Lösungswärme mit Hilfe eines Wasserkühlers abgeführt. In der JP 62059522 A wird ein Anlagensystem zur Herstellung von Ammoniakwasser beschrieben. Auch hier wird das Ammoniak verdampft, anschließend gefiltert und in einer Kolonne mit dem Wasser umgesetzt. An der Kolonne ist ein Kühler angeschlossen, um die wässrige Ammoniaklösung zu kühlen.

Bei allen beschriebenen Herstellungsverfahren werden als Kühlmittel zusätzliche Einsatzstoffe wie beispielsweise Kühlwasser in den Prozeß eingebracht. Hieraus resultieren jedoch mehrere Nachteile. Neben dem zusätzlichen Aufwand, dieses Kühlmedium in ausreichender Menge mit entsprechend niedriger Temperatur zur Verfügung zu stellen, ergeben sich aus naturbedingten Schwankungen, wie sie sich im Falle der Verwendung von Kühlwasser ergeben, weitere Probleme. Je nach Jahreszeit und Aufbereitungsart des Kühlwassers schwankende Temperaturen beeinflussen unmittelbar die Absorptionsfähigkeit des Wassers für das Ammoniak. Daher ist die Kapazität der Anlage von Zufälligkeiten abhängig und eine Produktionsplanung kaum möglich. Um dieses Schwankungen auszugleichen, benötigen herkömmliche Produktionssysteme verfahrenstechnisch aufwendige bzw. großvolumige Apparate.

Weiterhin ermöglicht die Verwendung von Kühlwasser lediglich eine relativ geringe Abkühlung. Dies führt zu entsprechend niedrigen Umsätzen und führt wegen der relativ geringen Raum-Zeit-Ausbeute letztlich ebenfalls zu relativ großen Apparaten.

Es stellte sich somit die Aufgabe, ein Verfahren zu finden, das den genannten Nachteilen abhilft und welches es ermöglicht, die Herstellung wässriger Ammoniaklösungen verfahrenstechnisch einfacher durchzuführen.

Demgemäß wurde ein Verfahren zur Herstellung wässriger Ammoniaklösungen durch Umsetzung von Wasser und Ammoniak gefunden, welches dadurch gekennzeichnet ist, daß man die anfallende Wärme mittels eines oder mehrerer mit Ammoniak betriebener Wärmetauscher abführt, wobei man einen Teil des bei der Kühlung verwendeten Ammoniaks gasförmig zur Herstellung der wässrigen Ammoniaklösung einsetzt.

Bei dem erfindungsgemäßen Verfahren erfolgt die Verdampfung zur Herstellung des Ammoniakgases sowie die Abfuhr der bei der Herstellung anfallenden Wärme mit dem gleichen Apparat. Hierdurch kann vorteilhafterweise die Bereitstellung anderer Kühlmedien wie beispielsweise Kühlwasser vermieden werden. Ein weiterer Vorteil besteht darin, daß die bei dem Prozeß benötigte Verdampfungsenergie zur Erzeugung des gasförmigen Ammoniaks direkt durch die gleichzeitige Abfuhr der anfallenden Wärme zur Verfügung gestellt wird. Weiterhin können durch die Verwendung von Ammoniak als Kühlmedium auch in einfacher Art und Weise relativ niedrige Temperaturen zur Kühlung realisiert werden, wodurch die Raum- Zeit-Ausbeute verbessert werden kann, was letztlich zu kleineren Apparaten führt. Der Produktstrom wird bevorzugt auf etwa +5 bis -10°C, besonders bevorzugt auf etwa 0 bis -7°C gekühlt. Die Temperatur im unteren Teil des Reaktors liegt bevorzugt bei etwa -7 bis +40°C, besonders bevorzugt etwa 10 bis 20°C. Der Absolutdruck innerhalb des Reaktors liegt bevorzugt etwa zwischen Normaldruck und einem Druck von etwa 2 bar, besonders bevorzugt zwischen etwa 1,35 bar bis 1,65 bar.

Mit Hilfe des erfindungsgemäßen Verfahrens lassen sich bevorzugt wäßrige Ammoniaklösungen mit Konzentrationen bis zu etwa 30 Gew.-% an Ammoniak herstellen. Besonders gut eignet sich das Verfahren für eine Konzentration von 25 Gew.-% an Ammoniak.

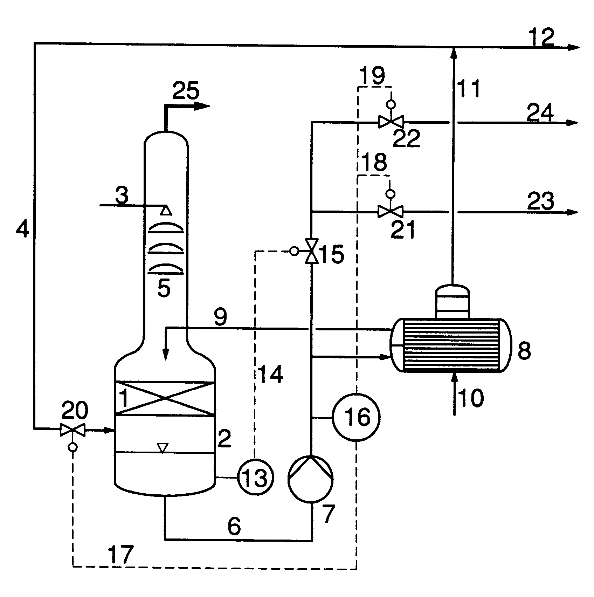

Zur Verdampfung des Ammoniaks und gleichzeitiger Abfuhr der anfallenden Wärme eignen sich bevorzugt Rohrbündelwärmetauscher. Im folgenden wird das erfindungsgemäße Verfahren schematisch anhand der Figur in einer bevorzugten Ausführungsform näher beschrieben.

Einem mit Füllkörpern (1) beschickten Reaktor (2) wird mittels Leitungen (3) und (4) Wasser bzw. Ammoniakgas zugeführt. Innerhalb des Reaktors bildet sich wässrige Ammoniaklösung, welche sich am Boden des Reaktors sammelt. Der obere Teil des Reaktors ist als Glockenbodenkolonne (5) aufgebaut. Nicht umgesetztes, aufsteigendes Ammoniakgas verbindet sich hier mit dem herabrieselnden Wasser ebenfalls zu wäßriger Ammoniaklösung, welche sich ebenso am Boden des Reaktors sammelt.

Die am Boden des Reaktors gesammelte Ammoniaklösung wird mittels Leitung (6) und Pumpe (7) dem Verdampfer (8) zugeführt. Die gekühlte Lösung wird über Leitung (9) erneut dem Reaktor zugeleitet. Dem Verdampfer wird durch Leitung (10) flüssiges Ammoniak zugeführt. Das Ammoniak verdampft innerhalb dieses Apparates unter Aufnahme von Wärme und wird über Leitung (11) als gasförmiges Ammoniak abgeführt.

Soweit für die Herstellung von wäßriger Ammoniaklösung weiteres Ammoniak benötigt wird, führt man dieses über Leitung (4) dem Reaktor zu. Überschüssiges Ammoniak kann über Leitung (12) einer weiteren Verwendung zugeführt werden.

Mit Hilfe einer Standregelung (13) in dem Reaktor und Steuerleitung (14) wird das Ventil (15) geregelt und es wird ständig ein Teilstrom aus dem Reaktor ausgeschleust.

Durch eine handelsüblichen Regelvorrichtung (16) wird die Konzentration an Ammoniak in dem Kreislauf überwacht und geregelt. Hierzu werden mittels der Steuerleitungen (17), (18) und (19) die Ventile (20), (21) und (22) geregelt. Falls das Produkt die gewünschte Konzentration aufweist, wird es durch Leitung (23) zur weiteren Verarbeitung abgeleitet, für den Fall, daß die gemessene Konzentration hiervon abweicht, wird das Produkt durch Leitung (24) abgezogen. Mit Hilfe des Ventils (20) wird die Zugabe an frischem Ammoniak in Abhängigkeit von der gemessenen Konzentration geregelt. Sich im Kreislauf sammelnde Inertgase werden über Leitung (25) abgeführt.

Das erfindungsgemäße Verfahren bietet den weiteren Vorteil, daß durch die Verwendung von Ammoniak als Kühlmedium relativ niedrige Temperaturen erzielt werden, wodurch die Absorptionsfähigkeit von Ammoniak in Wasser verbessert wird. Dies führt neben einer Verbesserung der Energieausnutzung vorteilhafterweise zu einer größeren Raum-Zeit-Ausbeute und ermöglicht so die Verwendung kleinerer Apparate.

Weiterhin bietet das erfindungsgemäße Verfahren die Möglichkeit, wäßrige Ammoniaklösungen in verfahrenstechnisch einfacher und wirtschaftlicher Art und Weise herzustellen, wobei der Einsatz zusätzlicher Kühlmittel wie beispielsweise Flußwasser vermieden werden kann.

### Beispiel

In einer großtechnischen Anlage zur Herstellung von wässriger Ammoniaklösung wurden etwa 40 000 t/a an Produkt mit etwa 25 Gew.-% Ammoniak hergestellt. Hiezu wurden etwa 30 000 t/a an Wasser und 10 000 t/a an Ammoniakgas eingesetzt.

Die Umsetzung wurde in einer Kolonne durchgeführt. Die Höhe der Kolonne betrug etwa 11 m, der Durchmesser lag im unteren Teil bei 1,0 m, im oberen bei 0,6 m.

Das so gewonnene Produkt wurde über einen mit Ammoniak betriebenen Wärmetauscher im Kreislauf auf den Reaktor zurückgeführt. Der Wärmetauscher hatte eine Austauschfläche von etwa 60 m². Mit Hilfe einer Standregelung in dem Reaktor wurde ständig ein Teilstrom aus dem Kreislauf ausgeschleust. Abhängig von der Konzentration wurde der ausgeschleuste Teilstrom einer entsprechenden Verwendung zugeführt.

## Patentansprüche

1. Verfahren zur Herstellung wäßriger Ammoniaklösungen durch Umsetzung von Wasser und Ammoniak, dadurch gekennzeichnet, daß man die anfallende Wärme mittels eines oder mehrerer mit Ammoniak betriebener Wärmetauscher abführt, wobei man einen Teil des bei der Kühlung verwendeten Ammoniaks gasförmig zur Herstellung der wäßrigen Ammoniaklösung einsetzt.

2. Verfahren nach Anspruch 1, dadurch gekennzeichnet, daß man die Abfuhr der Wärme und die Ammoniakgaserzeugung in einem Apparat durchführt.
